# EUROPEAN PATENT SPECIFICATION

(11) **EP 3 944 461 B1**
(45) Date of publication and mention of the grant of the patent: **25.11.2026**
(21) Application number: 21186576.1
(22) Date of filing: 20.07.2021
(51) Int. Cl.: H02J 9/06

(54) **A METHOD AND A DEVICE FOR POWER SUPPLY SWITCHOVER IN A POWER SYSTEM**
VERFAHREN UND VORRICHTUNG ZUR LEISTUNGSVERSORGUNGSUMSCHALTUNG IN EINEM STROMVERSORGUNGSSYSTEM
PROCÉDÉ ET DISPOSITIF DE COMMUTATION D'ALIMENTATION DANS UN SYSTÈME D'ALIMENTATION ÉLECTRIQUE

(30) Priority: 23.07.2020 CN 202010714973
(43) Date of publication of application: 26.01.2022
(73) Proprietor: Siemens Aktiengesellschaft, 80333 München (DE)
(72) Inventor: CAO, Zhen, Nanjing, 211100 (CN); CUI, Feng Xian, Nanjing, 211100 (CN); WANG, Ya Li, Nanjing, 211100 (CN); GAO, Di Jun, Nanjing, 211100 (CN); QIN, Lei Ming, Nanjing, 211100 (CN)
(74) Representative: HKW Intellectual Property PartG mbB

(56) References cited:
- EP-A2- 2 681 825
- JP-A- 2015 532 582
- KR-A- 20200 005 070
- US-A1- 2015 333 657

## Description

### TECHNICAL FIELD

The present invention relates to the field of power systems, and in particular to a method and a device for power supply switchover in a power system.

### BACKGROUND OF THE INVENTION

Currently, devices used for fast bus transfer (FBT) can be used for switching between two power supplies. During normal operation, one power supply currently in operation is used as the main power supply, and the other power supply is used as a backup power supply.

The FBT system can quickly switch the bus connected to the load (such as a motor) from the main power supply currently in operation to the backup power supply in the event of a failure. Its function is not only to maintain continuous operation of the equipment, but also to prevent damage to the motor or other connected loads. The switching between two power supplies can only be performed when certain conditions are met. For example, the condition for the quick mode should be met. This mode is the ideal and also the fastest way of connecting. In the quick mode, within a short period of time (connecting time) when the working circuit breaker is just tripped, the residual voltage attenuation on the bus is very small, the residual voltage on the bus is not lower than the fast-transfer undervoltage lockout value, and the angle difference and frequency difference from the equipment power supply are still within the specified ranges, and the quick mode can be initiated to connect immediately. That is, connecting is possible when Δ*φ* < Δ*φ*_{fast transfer} and Δ*f* < Δ*f*_{fast transfer}, where Δ*φ* is the phase angle difference between the attenuated bus voltage and the voltage of the backup power supply, Δ*f* is the frequency difference between the attenuated bus voltage and the voltage of the backup power supply, Δ*φ*_{fast transfer} is the set phase difference, and Δ*f*_{fast transfer} is the set frequency difference, among which Δ*φ* and Δ*f* are measured in real time.

JP 2015 532582 A discloses an inverter with at least one DC input for connecting to an energy producing device and/or an energy store and with a multiphase AC output for connecting to a local energy distribution network, which is coupled to a likewise multiphase master energy supply network via a switching device.

EP 2 681 825 A2 discloses a fast bus transfer method and device to reduce, by transferring between a main power supply and a backup power supply, the impact on a load connected to a bus caused by a power cut. The method comprises: 1) calculating the amplitude of the voltage vector difference between the bus and the backup power supply and the phase angle difference between the bus and the backup power supply; 2) transferring the load on the bus to said backup power supply only when the amplitude is less than its limit value and the phase angle difference is less than 90°. The device comprises: a detection module; a calculation module; a comparison module; and a transfer module. By calculating the real-time residual voltage, it is unnecessary for a user to know all the details of the residual voltage characteristic, and he/she can easily achieve fast transfer simply by setting the limit of the voltage difference at the moment when a circuit breaker of the backup power supply is closed.

KR 2020 0005070 A discloses an uninterruptible power supply (UPS) management system for detecting a system abnormality and enabling power provided from a power supply source to be stably provided to a load by using UPS or an energy storage system (ESS) and a switch device. The UPS management system comprises: a power supply source including renewable or diesel generators; a UPS system including an ESS; a load connected in parallel with the power supply source and the UPS system; a first switch determining an electrical connection between power generated in the power supply source and the load; a second switch determining an electrical connection between the load and a system; a first sensor unit measuring state information of the system; and a control unit controlling on and off operations of the first switch and the second switch in accordance with the measured value of the first sensor unit, and controlling operations of the power supply source and the UPS system.

### SUMMARY OF THE INVENTION

In view of the above, the present invention provides a method for power supply switchover in a power system, wherein the method includes the features of claim 1.

In the method according to the above, optionally, determining whether there is at least one sound phase among the three phases comprises:
determining whether there is at least one sound phase among the three phases based on the incoming line corresponding to the power supply currently in operation.

In the method according to the above, optionally, determining whether the power system is faulty comprises:
obtaining the line voltage of each line in the incoming line, and
determining that the power system is faulty if any line voltage of any line is lower than or equal to a first preset threshold, or
obtaining the zero-sequence voltage of the incoming line, and determining that the power system is faulty if the zero-sequence voltage is higher than or equal to a second preset threshold, or
obtaining the negative-sequence voltage of the incoming line, and determining that the power system is faulty if the negative-sequence voltage is higher than or equal to a third preset threshold.

In the method according to the above, optionally, determining whether there is at least one sound phase among the three phases comprises:
obtaining the current on each phase;
determining a phase is? sound if the current on the phase is lower than or equal to a preset threshold and greater than or equal to a current-carrying threshold.

In the method according to the above, optionally, after obtaining a power data on the sound phase, the method comprises:
determining, through a sampling voltage on the sound phase, whether the backup power supply meets the condition for connecting in the quick mode after the main power supply is disconnected.

In the method according to the above, optionally, after obtaining a power data on the sound phase, the method further comprises:
determining, through the power data on the sound phase, whether the backup power supply meets the condition for connecting in the quick mode after the main power supply is disconnected;
if yes, sending a connecting instruction to the circuit breaker on the incoming line of the backup power supply so that the backup power supply connects in the quick mode after the main power supply is disconnected.

The present invention also provides a device for power supply switchover in a power system, wherein the power system comprises two power supplies, each of the power supplies is connected to a bus through an incoming line, the power supply currently in operation is used as the main power supply, the other power supply is used as a backup power supply, both the incoming line and the bus have three phases, the lines are connected by their phases, and the device comprises:
an identification unit, used to identify a fault in the power system, and, if a fault is identified, to trigger a determining unit;
the determining unit, used to determine whether there is at least one sound phase among the three phases, and, if there is, to trigger an obtaining unit;
the obtaining unit, used to obtain a power data on the sound phase before the main power supply is disconnected, wherein the power data is used to determine whether the backup power supply meets the condition for connecting in the quick mode after the main power supply is disconnected.

In the device according to the above, optionally, the identification unit is specifically used to:
obtain the line voltage of each line in the incoming line, and determine that the power system is faulty if any line voltage of any line is lower than or equal to a first preset threshold, or
obtain the zero-sequence voltage of the incoming line, and determine that the power system is faulty if the zero-sequence voltage is higher than or equal to a second preset threshold, or
obtain the negative-sequence voltage of the incoming line, and determine that the power system is faulty if the negative-sequence voltage is higher than or equal to a third preset threshold.

In the device according to the above, optionally, the determining unit is specifically used to:
obtain the current on each phase;
determine a phase is sound if the current on the phase is lower than or equal to a preset threshold and greater than or equal to a current-carrying threshold.

In the device according to the above, optionally, the device further comprises:
a deciding unit, used to decide, through the power data on the sound phase, whether the backup power supply meets the condition for connecting in the quick mode after the main power supply is disconnected, and if yes, to trigger a sending unit;
the sending unit, used to send a connecting instruction to the circuit breaker on the incoming line of the backup power supply so that the backup power supply connects in the quick mode after the main power supply is disconnected.

The present invention further provides a device for power supply switchover in a power system, wherein the power system comprises two power supplies, each of the power supplies is connected to a bus through an incoming line, the power supply currently in operation is used as the main power supply, the other power supply is used as a backup power supply, both the incoming line and the bus have three phases, the lines are connected by their phases, and the device comprises:
at least one memory, used to store instructions;
at least one processor, used to execute the method for power supply switchover in a power system according to any of the above according to the instructions in the memory.

The present invention further provides a readable storage medium, wherein the readable storage medium stores machine-readable instructions, and, when the machine-readable instructions are executed by a machine, the machine executes the method for power supply switchover in a power system according to any of the above.

It can be seen from the above solution that, after identifying a fault in the power system, the present invention identifies a sound phase in the power line and uses the power data on the sound phase to determine whether the backup power supply meets the condition for connecting after the main power supply is disconnected. This can maximize the success rate of switching in the quick mode, thereby effectively reducing the time of power loss in the power system.

### BRIEF DESCRIPTION OF THE DRAWINGS

The preferred embodiments of the present invention will be described in detail below with reference to the drawings, so that those skilled in the art will better understand the above and other features and advantages of the present invention. In the drawings:
Figure 1 is a schematic structural diagram of part of a power system comprising two power supplies.
Figure 2 is a schematic flowchart of the method for power supply switchover in a power system according to one embodiment of the present invention.
Figure 3 is a schematic flowchart of the method for power supply switchover in a power system according to another embodiment of the present invention.
Figure 4 is a schematic structural diagram of the device for power supply switchover in a power system according to one embodiment of the present invention.
Figure 5 is a schematic structural diagram of the device for power supply switchover in a power system according to another embodiment of the present invention.

### PARTICULAR EMBODIMENTS

The following example embodiments will further illustrate the present invention in detail in order to clarify its purpose, technical solution and advantages.

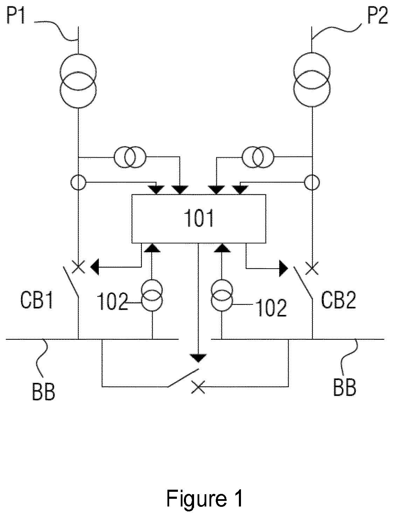

Figure 1 shows a schematic structural diagram of part of a power system with the fast transfer function. The power supply currently in operation is used as the main power supply, and the other power supply is used as a backup power supply. The main power supply P1 is connected to the bus through an incoming line, and the backup power supply P2 is also connected to the bus through an incoming line. The three phases in the incoming line are phase A, phase B and phase C, which are respectively connected to the corresponding three phases of the bus BB. All the loads are connected to the bus BB through the outgoing lines. That is, the incoming line, bus and outgoing line on phase A are connected, and similarly, the incoming line, bus and outgoing line on phase B and those on phase C are respectively connected. A switch CB1 is provided on the incoming line of the main power supply P1, and the main power supply P1 can be disconnected from the bus BB through the switch CB1; a switch CB2 is provided on the incoming line of the backup power supply P2, and the backup power supply P2 can be disconnected from the bus BB through the switch CB2.

When the power system is faulty, a relay protection device will be started to disconnect the main power supply P1 that is currently in operation, and the FBT system 101 will quickly switch the bus BB to the backup power supply P2. When the power system is faulty, a device in the power system may be faulty, or the line on a certain phase is faulty. For the quick mode, it is necessary to obtain the power data on one phase in real time to determine whether connecting is possible. However, the connecting time of the quick mode is only a short period of the time after the circuit breaker of the main power supply P1 is disconnected. If the connecting time is missed, the quick mode switching will fail and eventually the power loss time of the power system will be extended. In view of this, the present invention provides a method and a device for power supply switchover in a power system, which can improve the success rate of quick mode switching.

### Embodiment 1

This embodiment provides a method for power supply switchover in a power system. The executor of the method is a device for power supply switchover in a power system. The device can be integrated in a FBT system, or can be provided separately, which will not be detailed here.

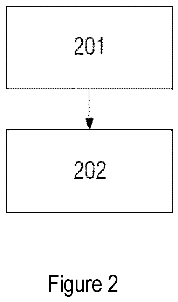

Figure 2 shows a schematic flowchart of the method for power supply switchover in a power system according to one embodiment of the present invention. The method comprises:
Step 201, determining whether there is at least one sound phase among the three phases after identifying a fault in the power system.

There are many ways to identify a fault in a power system. For example, after a relay protection device in the power system identifies a fault, it can send a signal to the device used for power switching in the power system to let it know that the power system is faulty, or the device used for power switching in the power system can determine whether the power system is faulty, so that a fault in the power system can be identified more quickly.

To determine whether there is at least one sound phase among the three phases, whether there is at least one sound phase among the three phases may be determined specifically based on the incoming line corresponding to the main power supply currently in operation. As shown in Figure 1, assuming that the main power supply P1 is currently in operation, the incoming line corresponding to the main power supply P1 is the line where CB1 is located. Specifically, the current of each of the phases of the incoming line may be obtained, and a certain phase is determined to be sound if the current on the phase is lower than or equal to a preset threshold and greater than or equal to a current-carrying threshold. The preset threshold here can be obtained based on experience, calculation or historical current data statistics. The current-carrying threshold here refers to the minimum value that is considered to indicate current on a certain line. When the current on a certain phase exceeds the preset threshold, the phase is determined to be faulty and taken as a faulty phase; when the current on a certain phase is lower than or equal to the preset threshold and greater than or equal to the current-carrying threshold, the phase is determined to be a sound phase. Of course, other methods may also be used to identify a sound phase, which will not be detailed here.

A sound phase in this embodiment refers to a phase that is not currently faulty. In this way, the power data on the sound phase are all data that can accurately reflect the real-time characteristics of the power system.

Step 202, if the result is yes, a power data on the sound phase is obtained before the main power supply is disconnected, wherein the power data is used to determine whether the backup power supply meets the condition for connecting in the quick mode after the main power supply is disconnected.

The number of sound phases may be one, two or three. In this embodiment, any power data on a sound phase can be selected and used as a parameter for determining the timing for the backup power supply to be connected. The power data may be, for example, the residual voltage of the bus on a sound phase. Next, the correct Δ*φ* and Δ*f* can be calculated based on relevant data on the sound phase, and it can be further determined whether the backup power supply meets the condition for connecting in the quick mode after the main power supply is disconnected. This condition for connecting is Δ*φ* < Δ*φ*_{fast transfer} and Δ*f* <Δ*f*_{fast transfer} when the device used for power switching in the power system sends a connecting instruction to the circuit breaker on the incoming line of the backup power supply, i.e., the bus BB is connected to the backup power supply P2 when this condition is met. For example, the time for the backup power supply to connect needs to be considered when the values of Δ*φ*_{fast transfer} and Δ*f*_{fast transfer} are determined. Wherein, Δ*φ* is the phase angle difference between the attenuated bus voltage and the voltage of the backup power supply, Δ*f* is the frequency difference between the attenuated bus voltage and the voltage of the backup power supply, Δ*φ*_{fast transfer} is the set phase difference, and Δ*f*_{fast transfer} is the set frequency difference, among which Δ*φ* and Δ*f* are measured in real time. How Δ*φ* and Δ*f* are specifically calculated is prior art and will not be detailed here.

How to determine whether the backup power supply meets the connecting condition after the main power supply is disconnected is prior art and will not be detailed here.

The inventors has found through inventive work that, for a sound phase, to determine the changes in Δ*φ* and Δ*f* before and after the main power supply is disconnected based on real-time electrical data does not have material impact on determining whether the condition for switching in the quick mode is met. Therefore, when the power system is found faulty, Δ*φ* and Δ*f* can be immediately obtained based on data on the sound phase, and it can be further determined whether the backup power supply meets the condition for connecting in the quick mode after the main power supply is disconnected.

Optionally, after Step 202, the method further comprises: before the power supply currently in operation is disconnected, determining, through a sampling voltage on the sound phase, whether the backup power supply meets the condition for connecting in the quick mode after the main power supply is disconnected. Since the calculation process is relatively short, normally, the calculation process takes less time than the time for the circuit breaker of the main power to disconnect. The time for the circuit breaker to disconnect means the time from the point when the relay protection device sends a signal to the point when the arc between the contacts of the circuit breaker of the main power supply completely extinguishes. In this way, the moment when the two power supplies can be switched, i.e., the moment for the backup power supply to be connected, can be obtained as soon as possible. If the result is yes, the backup power supply can be connected immediately after the main power supply is disconnected.

Optionally, if the result is no, after the main power supply is disconnected, the power data of any one of the three phases is used to determine whether the backup power supply meets the condition for connecting in the quick mode. That is, when no phase is sound, after the power supply currently in operation is disconnected, the power data of any one of the phases is selected and used as a parameter to determine whether the backup power supply meets the condition for connecting in the quick mode.

In this embodiment, after a fault is identified in the power system, a sound phase in the power line is identified and the power data on the sound phase is used to determine whether the backup power supply meets the condition for connecting after the main power supply is disconnected. This can maximize the success rate of connecting in the quick mode, thereby effectively reducing the time of power loss in the power system.

### Embodiment 2

This embodiment provides a supplementary description of the method for power supply switchover in a power system in embodiment 1.

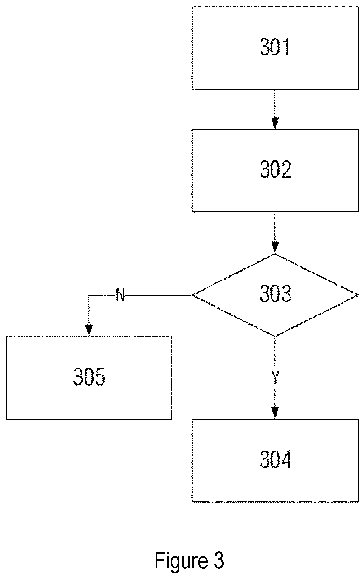

Figure 3 is a schematic flowchart of the method for power supply switchover in a power system according to one embodiment of the present invention.

Step 301, determining whether the power system is faulty, and, if yes, going to Step 302.

The method for determining whether the power system is faulty in this embodiment may be any of the following:
obtaining the line voltage of each line in the incoming line, and determining that the power system is faulty if any line voltage of any line is lower than a first preset threshold, or
obtaining the zero-sequence voltage of the incoming line, and determining that the power system is faulty if the zero-sequence voltage is higher than a second preset threshold, or
obtaining the negative-sequence voltage of the incoming line, and determining that the power system is faulty if the negative-sequence voltage is higher than a third preset threshold.

This determination process may be done by the power supply switchover device in the power system. For example, a voltage sensor 102 is provided on each phase between the switch CB1 and the bus BB in Figure 1, the voltage data of each phase in the incoming line is obtained through the voltage sensor 102, and then the line voltage, negative-sequence voltage and zero-sequence voltage are obtained. Among them, a line voltage is the voltage between any two phases. A negative-sequence voltage is the voltage component when a three-phase alternating current is unbalanced. How to specifically obtain a line voltage, negative-sequence voltage and zero-sequence voltage is prior art and will not be detailed here. Specifically, the operations of obtaining the line voltage, zero-sequence voltage, and negative-sequence voltage may be performed at the same time, and the determination is made. As long as one of them meets the above condition, it can be determined that the power system is faulty. This step is done by the device for power supply switchover in the power system, the determination is made fast, and subsequent operations can be performed as soon as possible.

The first preset threshold, the second preset threshold, and the third preset threshold in this embodiment can all be determined according to actual conditions, which will not be detailed here.

Step 302, obtaining the current of each phase in the incoming line corresponding to the main power supply, and determining a phase is sound if the current on the phase is lower than or equal to a preset threshold and greater than or equal to a current-carrying threshold.

The current of each phase is the real-time current. By sampling each phase in the incoming line, the real-time current of each phase can be obtained. If it is greater than the preset threshold, the phase is a faulty phase. If it is lower than or equal to the preset threshold and greater than or equal to the current-carrying threshold, the phase is a sound phase. There may be one, two or three sound phases.

Step 303, determining, through the power data on the sound phase, whether the backup power supply meets the condition for connecting in the quick mode after the main power supply is disconnected, and if yes, going to Step 304, or, if no, going to Step 305.

For example, Δ*φ* and Δ*f* are obtained based on data on a sound phase, and it can be further determined whether the backup power supply meets the condition for connecting in the quick mode after the main power supply is disconnected. Since the determination process is very short, it can be completed before the circuit breaker of the power supply currently in operation is disconnected How to specifically determine whether the backup power supply meets the connecting condition based on Δ*φ* and Δ*f* is prior art and will not be detailed here.

Step 304, sending a connecting instruction to the circuit breaker on the incoming line of the backup power supply so that the backup power supply connects in the quick mode after the main power supply is disconnected.

In this way, after it is determined that the backup power supply meets the condition for connecting through the power data on a sound phase, it is possible to send a connecting instruction to the circuit breaker on the incoming line of the backup power supply immediately after the power supply currently in operation is disconnected so that the backup power supply connects as soon as possible.

Step 305, determining whether the backup power supply meets the connecting condition in the real-time quick mode.

The real-time quick mode is a mode initiated when the condition for the quick mode is not met. The condition for the real-time quick mode is prior art and will not be detailed here. Of course, when the determination result in Step 303 is no, the process may go directly to determining whether the condition for the same-phase capturing mode, residual voltage mode or another existing switchover mode is met, which will not be detailed here.

Among them, the real-time quick mode may be, for example:
1) calculating the amplitude of the difference of voltage vector Δ*U_{forecast}* between the bus and the backup power supply and the phase angle difference Δ*φ_{forecast}* between the bus and the backup power supply;
2) switching the bus load to the backup power supply only when Δ*U_{forecast}* is lower than its limit Δ*U_{RTFTparameter},* and Δ*φ_{forecast}* is smaller than 90°.

The real-time quick mode is prior art and will not be detailed here.

According to this embodiment, after a fault is identified in the power system, a sound phase in the power line is identified and the power data on the sound phase is used to determine whether the backup power supply meets the condition of the quick mode, and, when it is determined that the condition of the quick mode is met, the backup power supply is connected immediately after the main power supply is disconnected, thus maximizing the success rate of connecting in the quick mode and thereby effectively reducing the time of power loss in the power system.

### Embodiment 3

This embodiment provides a device for power supply switchover in a power system. The power system comprises two power supplies, each of the power supplies is connected to a bus through an incoming line, the power supply currently in operation is used as the main power supply, the other power supply is used as a backup power supply, both the incoming line and the bus have three phases, and the lines are connected by their phases.

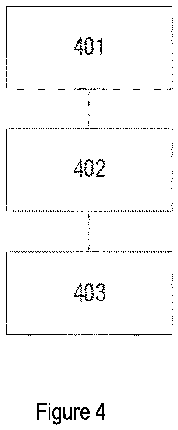

As shown in Figure 4, the device for power supply switchover in a power system in this embodiment comprises an identification unit 401, a determining unit 402 and an obtaining unit 403. Among them, the identification unit 401 is used to determine whether the power system is faulty, and, if the result is yes, to trigger a determining unit 402; the determining unit 402 is used to determine whether at least one phase is sound among the three phases, and, if the result is yes, to trigger an obtaining unit 403; the obtaining unit 403 is used to obtain a power data on the sound phase before the main power supply is disconnected, wherein the power data is used to determine whether the backup power supply meets the condition for connecting in the quick mode after the main power supply is disconnected.

Optionally, the identification unit 401 is specifically used to:
obtain the line voltage of each line in the incoming line, and determine that the power system is faulty if any line voltage of any line is lower than or equal to a first preset threshold, or
obtain the zero-sequence voltage of the incoming line, and determine that the power system is faulty if the zero-sequence voltage is higher than or equal to a second preset threshold, or
obtain the negative-sequence voltage of the incoming line, and determine that the power system is faulty if the negative-sequence voltage is higher than or equal to a third preset threshold.

Optionally, the determining unit 402 is specifically used to:
obtain the current on each phase;
determine a phase is sound if the current on the phase is lower than or equal to a preset threshold.

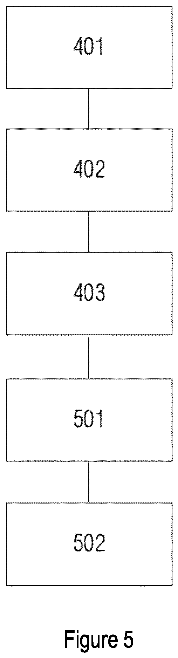

Optionally, as shown in Figure 5, the device for power supply switchover in a power system in this embodiment further comprises a deciding unit 501 and a sending unit 502, wherein the deciding unit 501 is used to decide, through the power data on a sound phase, whether the backup power supply meets the condition for connecting in the quick mode after the main power supply is disconnected, and if yes, to trigger the sending unit 502. The sending unit 502 is used to send a connecting instruction to the circuit breaker on the incoming line of the backup power supply so that the backup power supply connects in the quick mode after the main power supply is disconnected.

The operation methods of each of the units in this embodiment are the same as those in the previous embodiments and will not be repeated here.

In this embodiment, after a fault is identified in the power system, a sound phase in the power line is identified and the power data on the sound phase is used to determine whether the backup power supply meets the condition for connecting after the main power supply is disconnected. This can maximize the success rate of switching in the quick mode, thereby effectively reducing the time of power loss in the power system.

The present invention also provides a device for power supply switchover in a power system, wherein the power system comprises two power supplies, each of the power supplies is connected to a bus through an incoming line, the power supply currently in operation is used as the main power supply, the other power supply is used as a backup power supply, both the incoming line and the bus have three phases, the lines are connected by their phases, and the device comprises at least one memory and at least one processor. Among them, the memory is used to store instructions. The processor is used to execute the method for power supply switchover in a power system described in any of the above embodiments according to the instructions in the memory.

The embodiments of the present invention also provide a readable storage medium. The readable storage medium stores machine-readable instructions, and, when the machine-readable instructions are executed by a machine, the machine executes the method for power supply switchover in a power system described in any of the above embodiments.

The readable storage medium stores machine-readable instructions, and, when the machine-readable instructions are executed by a machine, the processor executes any of the methods described above. Specifically, a system or device equipped with a readable storage medium may be provided, the software program code for implementing the functions of any of the above embodiments is stored on the readable storage medium, and a computer or processor of the system or device can read and execute the machine-readable instructions stored in the readable storage medium.

In this case, the program code itself read from the readable medium can implement the functions of any of the above embodiments, and so the machine readable code and the readable storage medium storing the machine readable code constitute part of the present invention.

Examples of the readable storage medium include floppy disks, hard disks, magneto-optical disks, optical disks (such as CD-ROM, CD-R, CD-RW, DVD-ROM, DVD-RAM, DVD-RW, DVD+RW), magnetic tape, volatile memory cards and ROM. Optionally, the program code may be downloaded from a server computer or a cloud via a communication network.

Those skilled in the art should understand that the various embodiments disclosed above can be transformed and modified without departing from the essence of the present invention. Therefore, the scope of the present invention should be limited by the appended claims.

It should be noted that not all steps and units in the above processes and system structure diagrams are necessary, and some steps or units can be ignored based on actual needs. The sequence of execution of the steps is not fixed, and can be adjusted as needed. The device structure described in the above embodiments may be a physical structure or a logical structure, i.e., some units may be implemented by the same physical entity, or some units may be implemented by multiple physical entities, or may be implemented by certain components in several independent devices working together.

In the above embodiments, the hardware units may be implemented mechanically or electrically. For example, a hardware unit or processor may comprise a permanent dedicated circuit or logic (such as a dedicated processor, FPGA or ASIC) to complete the corresponding operation. The hardware unit or processor may also comprise a programmable logic or circuit (such as a general-purpose processor or other programmable processors), which may be temporarily set by software to complete the corresponding operation. The specific implementation method (mechanical, or by a dedicated permanent circuit, or a temporarily set circuit) may be determined based on the cost and time considerations.

The above are only some preferred embodiments of the present invention, and are not intended to limit the present invention. Any modification, equivalent replacement and improvement made without departing from the motivation and principle of the present invention shall be included in the scope of the present invention.

## Claims

1. A method for power supply switchover in a power system, wherein the power system comprises two power supplies (P1, P2), each of the power supplies (P1, P2) is connected to a bus (BB) through an incoming line, the power supply (P1, P2) currently in operation is used as the main power supply (P1), the other power supply is used as a backup power supply (P2), both the incoming line and the bus (BB) have three phases (A, B, C), and the lines are connected by their phases (A, B, C), wherein the method comprises:
determining (201) whether there is at least one sound phase (A, B, C) among the three phases (A, B, C) after identifying a fault in the power system;
if there is, obtaining (202) a power data on the sound phase (A, B, C) before the main power supply (P1) is disconnected,
wherein the power data is used to determine whether the backup power supply (P2) meets the condition for connecting in a quick mode after the main power supply (P1) is disconnected, wherein the connecting in the quick mode is possible when a phase angle difference Δ*φ* between an attenuated bus voltage and a voltage of the backup power supply is smaller than a set phase angle difference Δ*φ*_{fast transfer} and a frequency difference Δ*f* between the attenuated bus voltage and the voltage of the backup power supply is smaller than a set frequency difference Δ*f*_{fast transfer}.

2. The method as claimed in claim 1, **characterized in that** determining (201) whether there is at least one sound phase (A, B, C) among the three phases (A, B, C) comprises:
determining (201) whether there is at least one sound phase (A, B, C) among the three phases (A, B, C) based on the incoming line corresponding to the power supply (P1, P2) currently in operation.

3. The method according to claim 1 or 2, **characterized in that** determining (301) whether the power system is faulty comprises:
obtaining the line voltage of each line in the incoming line, and determining (301) that the power system is faulty if any line voltage of any line is lower than or equal to a first preset threshold, or
obtaining a zero-sequence voltage of the incoming line, and determining (301) that the power system is faulty if the zero-sequence voltage is higher than or equal to a second preset threshold, or
obtaining the negative-sequence voltage of the incoming line, and determining (301) that the power system is faulty if the negative-sequence voltage is higher than or equal to a third preset threshold.

4. The method according to any one of claims 1 - 3, **characterized in that** determining (201) whether there is at least one sound phase (A, B, C) among the three phases (A, B, C) comprises:
obtaining (302) the current on each phase (A, B, C);
determining (302) a phase (A, B, C) is sound if the current on the phase (A, B, C) is lower than or equal to a preset threshold and greater than or equal to a current-carrying threshold.

5. The method according to any of claims 1 - 4, **characterized in that**, after obtaining (202) a power data on the sound phase (A, B, C), the method comprises:
determining (303), through a sampling voltage on the sound phase (A, B, C), whether the backup power supply (P2) meets the condition for connecting in the quick mode after the main power supply (P1) is disconnected.

6. The method according to any of claims 1 - 4, **characterized in that**, after obtaining (202) a power data on the sound phase (A, B, C), the method further comprises:
determining (303), through the power data on the sound phase (A, B, C), whether the backup power supply (P2) meets the condition for connecting in the quick mode after the main power supply (P1) is disconnected;
if yes, sending a connecting instruction to a circuit breaker on the incoming line of the backup power supply (P2) so that the backup power supply (P2) connects in the quick mode after the main power supply (P1) is disconnected.

7. A device for power supply switchover in a power system, wherein the power system comprises two power supplies (P1, P2), each of the power supplies (P1, P2) is connected to a bus (BB) through an incoming line, the power supply (P1, P2) currently in operation is used as the main power supply (P1), the other power supply (P2) is used as a backup power supply (P2), both the incoming line and the bus (BB) have three phases (A, B, C), and lines are connected by their phases (A, B, C), wherein the device comprises:
an identification unit (401), used to identify a fault in the power system, and, if a fault is identified, to trigger a determining unit (402);
the determining unit (402), used to determine whether there is at least one sound phase (A, B, C) among the three phases (A, B, C), and, if there is, to trigger an obtaining unit (403); and
the obtaining unit (403), used to obtain a power data on the sound phase (A, B, C) before the main power supply (P1) is disconnected,
wherein the power data is used to determine whether the backup power supply (P2) meets the condition for connecting in a quick mode after the main power supply (P1) is disconnected, wherein the connecting in the quick mode is possible when a phase angle difference Δ*φ* between an attenuated bus voltage and a voltage of the backup power supply is smaller than a set phase angle difference Δ*φ*_{fast transfer} and a frequency difference Δ*f* between the attenuated bus voltage and the voltage of the backup power supply is smaller than a set frequency difference Δ*f*_{fast transfer}.

8. The device according to claim 7, **characterized in that** the identification unit (401) is specifically used to:
obtain the line voltage of each line in the incoming line, and determine that the power system is faulty if any line voltage of any line is lower than or equal to a first preset threshold, or
obtain the zero-sequence voltage of the incoming line, and determine that the power system is faulty if the zero-sequence voltage is higher than or equal to a second preset threshold, or
obtain the negative-sequence voltage of the incoming line, and determine that the power system is faulty if the negative-sequence voltage is higher than or equal to a third preset threshold.

9. The device according to claim 7 or 8, **characterized in that** the determining unit (402) is specifically used to:
obtain the current on each phase (A, B, C);
determine a phase (A, B, C) is sound if the current on the phase (A, B, C) is lower than or equal to a preset threshold and greater than or equal to a current-carrying threshold.

10. The device according to any one of claims 7 - 9, **characterized in that** the device further comprises:
a deciding unit (501), used to decide, through the power data on the sound phase (A, B, C), whether the backup power supply (P2) meets the condition for connecting in the quick mode after the main power supply (P1) is disconnected, and if yes, to trigger a sending unit (502);
the sending unit (502), used to send a connecting instruction to the circuit breaker on the incoming line of the backup power supply (P2) so that the backup power supply (P2) connects in the quick mode after the main power supply (P1) is disconnected.

11. A device according to any one of claim 7 - 10, further comprising:
at least one memory, used to store instructions;
at least one processor, used to execute the method for power supply switchover in a power system according to claim 2 or 5 according to the instructions in the memory.

12. A readable storage medium, **characterized in that** the readable storage medium stores machine-readable instructions, and, when the machine-readable instructions are executed by a machine, the machine executes the method for power supply switchover in a power system according to any of claims 1 - 6.

## Patentansprüche

1. Verfahren zur Stromversorgungsumschaltung in einem Stromversorgungssystem, wobei das Stromversorgungssystem zwei Stromversorgungen (P1, P2) umfasst, jede der Stromversorgungen (P1, P2) über eine eingehende Leitung mit einem Bus (BB) verbunden ist, die Stromversorgung (P1, P2), die derzeit im Betrieb ist, als Hauptstromversorgung (P1) verwendet wird, die andere Stromversorgung als eine Backup-Stromversorgung (P2) verwendet wird, sowohl die eingehende Leitung als auch der Bus (BB) drei Phasen (A, B, C) aufweisen, und die Leitungen durch ihre Phasen (A, B, C) verbunden sind, wobei das Verfahren Folgendes umfasst:
Bestimmen (201), ob es mindestens eine fehlerfreie Phase (A, B, C) unter den drei Phasen (A, B, C) gibt, nachdem ein Fehler in dem Stromversorgungssystem identifiziert wurde;
falls vorhanden, Erhalten (202) von Leistungsdaten über die fehlerfreie Phase (A, B, C), bevor die Hauptstromversorgung (P1) getrennt wird,
wobei die Leistungsdaten verwendet werden, um zu bestimmen, ob die Backup-Stromversorgung (P2) die Bedingung zum Verbinden in einem Schnellmodus erfüllt, nachdem die Hauptstromversorgung (P1) getrennt wurde, wobei das Verbinden in dem Schnellmodus möglich ist, wenn eine Phasenwinkeldifferenz Δφ zwischen einer gedämpften Busspannung und einer Spannung der Backup-Stromversorgung kleiner als eine eingestellte Phasenwinkeldifferenz Δφ_{Schnelltransfer} ist und eine Frequenzdifferenz Δf zwischen der gedämpften Busspannung und der Spannung der Backup-Stromversorgung kleiner als eine eingestellte Frequenzdifferenz Δf_{Schnelltransfer} ist.

2. Verfahren nach Anspruch 1, **dadurch gekennzeichnet, dass** das Bestimmen (201), ob es mindestens eine fehlerfreie Phase (A, B, C) unter den drei Phasen (A, B, C) gibt, Folgendes umfasst:
Bestimmen (201), ob es mindestens eine fehlerfreie Phase (A, B, C) unter den drei Phasen (A, B, C) gibt, basierend auf der eingehenden Leitung, die der Stromversorgung (P1, P2) entspricht, die sich derzeit im Betrieb befindet.

3. Verfahren nach Anspruch 1 oder 2, **dadurch gekennzeichnet, dass** das Bestimmen (301), ob das Stromversorgungssystem fehlerhaft ist, Folgendes umfasst:
Erhalten der Leitungsspannung jeder Leitung in der eingehenden Leitung und Bestimmen (301), dass das Stromversorgungssystem fehlerhaft ist, falls irgendeine Leitungsspannung irgendeiner Leitung niedriger oder gleich einer ersten voreingestellten Schwelle ist, oder
Erhalten einer Nullsequenzspannung der eingehenden Leitung und Bestimmen (301), dass das Stromversorgungssystem fehlerhaft ist, falls die Nullsequenzspannung höher oder gleich einer zweiten voreingestellten Schwelle ist, oder
Erhalten der Negativsequenzspannung der eingehenden Leitung und Bestimmen (301), dass das Stromversorgungssystem fehlerhaft ist, falls die Negativsequenzspannung höher oder gleich einer dritten voreingestellten Schwelle ist.

4. Verfahren nach einem der Ansprüche 1-3, **dadurch gekennzeichnet, dass** das Bestimmen (201), ob es mindestens eine fehlerfreie Phase (A, B, C) unter den drei Phasen (A, B, C) gibt, Folgendes umfasst:
Erhalten (302) des Stroms in jeder Phase (A, B, C);
Bestimmen (302), dass eine Phase (A, B, C) fehlerfrei ist, falls der Strom in der Phase (A, B, C) kleiner oder gleich einer voreingestellten Schwelle und größer oder gleich einer Stromführungsschwelle ist.

5. Verfahren nach einem der Ansprüche 1-4, **dadurch gekennzeichnet, dass** das Verfahren nach dem Erhalten (202) von Leistungsdaten über die fehlerfreie Phase (A, B, C) Folgendes umfasst:
Bestimmen (303), durch eine Abtastspannung an der fehlerfreien Phase (A, B, C), ob die Backup-Stromversorgung (P2) die Bedingung für das Verbinden im Schnellmodus erfüllt, nachdem die Hauptstromversorgung (P1) getrennt wurde.

6. Verfahren nach einem der Ansprüche 1-4, **dadurch gekennzeichnet, dass** das Verfahren nach dem Erhalten (202) von Leistungsdaten über die fehlerfreie Phase (A, B, C) ferner Folgendes umfasst:
Bestimmen (303), durch die Leistungsdaten über die fehlerfreie Phase (A, B, C), ob die Backup-Stromversorgung (P2) die Bedingung für das Verbinden im Schnellmodus erfüllt, nachdem die Hauptstromversorgung (P1) getrennt wurde.
falls ja, Senden einer Verbindungsanweisung an einen Leistungsschalter auf der eingehenden Leitung der Backup-Stromversorgung (P2), so dass die Backup-Stromversorgung (P2) im Schnellmodus verbunden wird, nachdem die Hauptstromversorgung (P1) getrennt wurde.

7. Vorrichtung zur Stromversorgungsumschaltung in einem Stromversorgungssystem, wobei das Stromversorgungssystem zwei Stromversorgungen (P1, P2) umfasst, jede der Stromversorgungen (P1, P2) über eine eingehende Leitung mit einem Bus (BB) verbunden ist, die Stromversorgung (P1, P2), die derzeit im Betrieb ist, als Hauptstromversorgung (P1) verwendet wird, die andere Stromversorgung (P2) als eine Backup-Stromversorgung (P2) verwendet wird, sowohl die eingehende Leitung als auch der Bus (BB) drei Phasen (A, B, C) aufweisen, und Leitungen durch ihre Phasen (A, B, C) verbunden sind, wobei die Vorrichtung Folgendes umfasst:
eine Identifikationseinheit (401), die zum Identifizieren eines Fehlers in dem Stromversorgungssystem und, falls ein Fehler identifiziert wird, zum Auslösen einer Bestimmungseinheit (402) verwendet wird;
die Bestimmungseinheit (402), die zum Bestimmen, ob es mindestens eine fehlerfreie Phase (A, B, C) unter den drei Phasen (A, B, C) gibt, und, falls vorhanden, zum Auslösen einer Erhalteeinheit (403) verwendet wird; und
die Erhalteeinheit (403), die zum Erhalten von Leistungsdaten über die fehlerfreie Phase (A, B, C) verwendet wird, bevor die Hauptstromversorgung (P1) getrennt wird,
wobei die Leistungsdaten verwendet werden, um zu bestimmen, ob die Backup-Stromversorgung (P2) die Bedingung zum Verbinden in einem Schnellmodus erfüllt, nachdem die Hauptstromversorgung (P1) getrennt wurde, wobei das Verbinden in dem Schnellmodus möglich ist, wenn eine Phasenwinkeldifferenz Δφ zwischen einer gedämpften Busspannung und einer Spannung der Backup-Stromversorgung kleiner als eine eingestellte Phasenwinkeldifferenz Δφ_{Schnelltransfer} ist und eine Frequenzdifferenz Δf zwischen der gedämpften Busspannung und der Spannung der Backup-Stromversorgung kleiner als eine eingestellte Frequenzdifferenz Δf_{Schnelltransfer} ist.

8. Vorrichtung nach Anspruch 7, **dadurch gekennzeichnet, dass** die Identifikationseinheit (401) speziell verwendet wird zum:
Erhalten der Leitungsspannung jeder Leitung in der eingehenden Leitung und Bestimmen, dass das Stromversorgungssystem fehlerhaft ist, falls irgendeine Leitungsspannung irgendeiner Leitung niedriger oder gleich einer ersten voreingestellten Schwelle ist, oder
Erhalten der Nullsequenzspannung der eingehenden Leitung und Bestimmen, dass das Stromversorgungssystem fehlerhaft ist, falls die Nullsequenzspannung höher oder gleich einer zweiten voreingestellten Schwelle ist, oder
Erhalten der Negativsequenzspannung der eingehenden Leitung und Bestimmen, dass das Stromversorgungssystem fehlerhaft ist, falls die Negativsequenzspannung höher oder gleich einer dritten voreingestellten Schwelle ist.

9. Vorrichtung nach Anspruch 7 oder 8, **dadurch gekennzeichnet, dass** die Bestimmungseinheit (402) speziell verwendet wird zum:
Erhalten des Stroms in jeder Phase (A, B, C);
Bestimmen, dass eine Phase (A, B, C) fehlerfrei ist, falls der Strom in der Phase (A, B, C) kleiner oder gleich einer voreingestellten Schwelle und größer oder gleich einer Stromführungsschwelle ist.

10. Vorrichtung nach einem der Ansprüche 7-9, **dadurch gekennzeichnet, dass** die Vorrichtung ferner Folgendes umfasst:
eine Entscheidungseinheit (501), die zum Entscheiden, durch die Leistungsdaten über die fehlerfreie Phase (A, B, C), ob die Backup-Stromversorgung (P2) die Bedingung für das Verbinden im Schnellmodus erfüllt, nachdem die Hauptstromversorgung (P1) getrennt wurde, und falls ja, zum Auslösen einer Sendeeinheit (502) verwendet wird;
die Sendeeinheit (502), die zum Senden einer Verbindungsanweisung an den Leistungsschalter auf der eingehenden Leitung der Backup-Stromversorgung (P2) verwendet wird, so dass die Backup-Stromversorgung (P2) im Schnellmodus verbunden wird, nachdem die Hauptstromversorgung (P1) getrennt wurde.

11. Vorrichtung nach einem der Ansprüche 7-10, die ferner Folgendes umfasst:
mindestens einen Speicher, der zum Speichern von Anweisungen verwendet wird;
mindestens einen Prozessor, der zum Ausführen des Verfahrens zur Stromversorgungsumschaltung in einem Stromversorgungssystem nach Anspruch 2 oder 5 gemäß den Anweisungen in dem Speicher verwendet wird.

12. Lesbares Speichermedium, **dadurch gekennzeichnet, dass** das lesbare Speichermedium maschinenlesbare Anweisungen speichert und, wenn die maschinenlesbaren Anweisungen durch eine Maschine ausgeführt werden, die Maschine das Verfahren zur Stromversorgungsumschaltung in einem Stromversorgungssystem nach einem der Ansprüche 1-6 ausführt.

## Revendications

1. Procédé de basculement d'alimentation électrique dans un système d'alimentation électrique, dans lequel le système d'alimentation électrique comprend deux alimentations électriques (P1, P2), chacune des alimentations électriques (P1, P2) est connectée à un bus (BB) par l'intermédiaire d'une ligne entrante, l'alimentation électrique (P1, P2) en cours de fonctionnement est utilisée comme alimentation électrique principale (P1), l'autre alimentation électrique est utilisée comme alimentation électrique de secours (P2), la ligne entrante et le bus (BB) comportent trois phases (A, B, C), et les lignes sont connectées par leurs phases (A, B, C), le procédé comprenant :
le fait de déterminer (201) s'il existe au moins une phase saine (A, B, C) parmi les trois phases (A, B, C) après identification d'un défaut dans le système d'alimentation électrique ;
dans l'affirmative, l'obtention (202) d'une donnée de puissance de la phase saine (A, B, C) avant que l'alimentation électrique principale (P1) soit déconnectée,
dans lequel les données de puissance sont utilisées pour déterminer si l'alimentation électrique de secours (P2) satisfait à la condition de connexion dans un mode rapide après que l'alimentation électrique principale (P1) a été déconnectée, dans lequel la connexion en mode rapide est possible lorsqu'une différence d'angle de phase Δφ entre une tension de bus atténuée et une tension de l'alimentation électrique de secours est inférieure à une différence d'angle de phase définie Δφ_{fast transfer} et qu'une différence de fréquence Δf entre la tension de bus atténuée et la tension de l'alimentation électrique de secours est inférieure à une différence de fréquence définie Δf_{fast transfer}.

2. Procédé selon la revendication 1, **caractérisé en ce que** le fait de déterminer (201) s'il existe au moins une phase saine (A, B, C) parmi les trois phases (A, B, C) comprend :
le fait de déterminer (201) s'il existe au moins une phase saine (A, B, C) parmi les trois phases (A, B, C) sur la base du fait que la ligne entrante correspond à l'alimentation électrique (P1, P2) en cours de fonctionnement.

3. Procédé selon la revendication 1 ou 2, **caractérisé en ce que** le fait de déterminer (301) si le système d'alimentation électrique est défaillant comprend :
l'obtention de la tension de ligne de chaque ligne dans la ligne entrante, et la détermination (301) du fait que le système d'alimentation électrique est défaillant si une tension de ligne quelconque est inférieure ou égale à un premier seuil prédéfini, ou
l'obtention d'une tension de séquence nulle de la ligne entrante et la détermination (301) du fait que le système d'alimentation électrique est défaillant si la tension de séquence nulle est supérieure ou égale à un deuxième seuil prédéfini, ou
l'obtention de la tension de séquence négative de la ligne entrante, et la détermination (301) du fait que le système d'alimentation électrique est défaillant si la tension de séquence négative est supérieure ou égale à un troisième seuil prédéfini.

4. Procédé selon l'une quelconque des revendications 1 à 3, **caractérisé en ce que** le fait de déterminer (201) s'il existe au moins une phase saine (A, B, C) parmi les trois phases (A, B, C) comprend :
l'obtention (302) du courant sur chaque phase (A, B, C) ;
la détermination (302) du fait qu'une phase (A, B, C) est saine si le courant sur la phase (A, B, C) est inférieur ou égal à un seuil prédéfini et supérieur ou égal à un seuil de transport de courant.

5. Procédé selon l'une quelconque des revendications 1 à 4, **caractérisé en ce que**, après l'obtention (202) d'une donnée de puissance sur la phase saine (A, B, C), le procédé comprend :
le fait de déterminer (303), par l'intermédiaire d'une tension d'échantillonnage sur la phase saine (A, B, C), si l'alimentation électrique de secours (P2) satisfait à la condition de connexion en mode rapide après que l'alimentation électrique principale (P1) a été déconnectée.

6. Procédé selon l'une quelconque des revendications 1 à 4, **caractérisé en ce que**, après l'obtention (202) d'une donnée de puissance sur la phase saine (A, B, C), le procédé comprend en outre :
le fait de déterminer (303), par l'intermédiaire des données de puissance sur la phase saine (A, B, C), si l'alimentation électrique de secours (P2) satisfait à la condition de connexion en mode rapide après que l'alimentation électrique principale (P1) a été déconnectée,
si oui, l'envoi d'une instruction de connexion à un disjoncteur sur la ligne entrante de l'alimentation électrique de secours (P2) de façon que l'alimentation électrique de secours (P2) se connecte en mode rapide après que l'alimentation électrique principale (P1) a été déconnectée.

7. Dispositif de basculement d'alimentation électrique dans un système d'alimentation électrique, dans lequel le système d'alimentation électrique comprend deux alimentations électriques (P1, P2), chacune des alimentations électriques (P1, P2) est connectée à un bus (BB) par l'intermédiaire d'une ligne entrante, l'alimentation électrique (P1, P2) en cours de fonctionnement est utilisée comme alimentation électrique principale (P1), l'autre alimentation électrique (P2) est utilisée comme alimentation électrique de secours (P2), la ligne entrante et le bus (BB) comportent trois phases (A, B, C), et les lignes sont connectées par leurs phases (A, B, C), le dispositif comprenant :
une unité d'identification (401), utilisée pour identifier une défaillance du système d'alimentation, et si une défaillance est identifiée, pour déclencher une unité de détermination (402) ;
l'unité de détermination (402), utilisée pour déterminer s'il existe au moins une phase saine (A, B, C) parmi les trois phases (A, B, C), et, dans l'affirmative, pour déclencher une unité d'obtention (403) ; et
l'unité d'obtention (403), utilisée pour obtenir une donnée de puissance sur la phase saine (A, B, C) avant que l'alimentation électrique principale (P1) soit déconnectée,
dans lequel les données de puissance sont utilisées pour déterminer si l'alimentation électrique de secours (P2) satisfait à la condition de connexion dans un mode rapide après que l'alimentation électrique principale (P1) a été déconnectée, dans lequel la connexion en mode rapide est possible lorsqu'une différence d'angle de phase Δφ entre une tension de bus atténuée et une tension de l'alimentation électrique de secours est inférieure à une différence d'angle de phase définie Δφ_{fast transfer} et qu'une différence de fréquence Δf entre la tension de bus atténuée et la tension de l'alimentation électrique de secours est inférieure à une différence de fréquence définie Δf_{fast transfer}.

8. Dispositif selon la revendication 7, **caractérisé en ce que** l'unité d'identification (401) est utilisée spécifiquement pour :
obtenir la tension de ligne de chaque ligne dans la ligne entrante, et déterminer que le système d'alimentation électrique est défaillant si une tension de ligne d'une ligne est inférieure ou égale à un premier seuil prédéfini, ou
obtenir la tension de séquence nulle de la ligne entrante et déterminer que le système d'alimentation électrique est défaillant si la tension de séquence nulle est supérieure ou égale à un deuxième seuil prédéfini, ou
obtenir la tension de séquence négative de la ligne entrante et déterminer que le système d'alimentation électrique est défaillant si la tension de séquence négative est supérieure ou égale à un troisième seuil prédéfini.

9. Dispositif selon la revendication 7 ou 8, **caractérisé en ce que** l'unité de détermination (402) est utilisée spécifiquement pour :
obtenir le courant sur chaque phase (A, B, C) ;
déterminer qu'une phase (A, B, C) est saine si le courant sur la phase (A, B, C) est inférieur ou égal à un seuil prédéfini et supérieur ou égal à un seuil de transport de courant.

10. Dispositif selon l'une quelconque des revendications 7 à 9, **caractérisé en ce que** le dispositif comprend en outre :
une unité de décision (501), utilisée pour décider, par l'intermédiaire des données de puissance sur la phase saine (A, B, C), si l'alimentation électrique de secours (P2) satisfait à la condition de connexion en mode rapide après que l'alimentation électrique principale (P1) a été déconnectée, et si oui, pour déclencher une unité d'envoi (502) ;
l'unité d'envoi (502), utilisée pour envoyer une instruction de connexion au disjoncteur sur la ligne entrante de l'alimentation électrique de secours (P2) de façon que l'alimentation électrique de secours (P2) se connecte en mode rapide après que l'alimentation électrique principale (P1) a été déconnectée.

11. Dispositif selon l'une quelconque des revendications 7 à 10, comprenant en outre :
au moins une mémoire, utilisée pour stocker des instructions ;
au moins un processeur, utilisé pour exécuter le procédé de basculement d'alimentation électrique dans un système d'alimentation selon la revendication 2 ou 5, conformément aux instructions contenues dans la mémoire.

12. Support de stockage lisible, **caractérisé en ce que** le support de stockage lisible stocke des instructions lisibles par machine et, lorsque les instructions lisibles par machine sont exécutées par une machine, la machine exécute le procédé de basculement d'alimentation électrique dans un système d'alimentation électrique selon l'une quelconque des revendications 1 à 6.
